# EUROPÄISCHE PATENTANMELDUNG

(11) **EP 2 169 154 A2**
(43) Veröffentlichungstag der Anmeldung: **31.03.2010**
(21) Anmeldenummer: 09163452.7
(22) Anmeldetag: 23.06.2009
(51) Int. Cl.: E05B 47/00, E05B 17/10, E05B 17/22, G07C 9/00, E05B 45/06

(54) **Türzentrale**

(30) Priorität: 24.06.2008 DE 102008029699
(71) Anmelder: GEZE GmbH, 71229 Leonberg (DE)
(72) Erfinder: Hucker, Matthias, 76359, Marxzell (DE); Kiesel, Rainer, 89160, Dornstadt (DE); Seifert, Thorsten, 70437, Stuttgart (DE)

(57) **Zusammenfassung**

Die Erfindung betrifft eine Türzentrale zur Steuerung eines elektrischen Türschlosses einer Tür, insbesondere zur Entriegelung des Türschlosses im Notfall, mit einem Tastschalter, wobei die Türzentrale auch eine Leseeinheit aufweist.

## Beschreibung

Die Erfindung betrifft eine Türzentrale nach dem Oberbegriff des Anspruchs 1.

Die bisher aus dem Stand der Technik bekannten Türzentralen für Türen in Flucht- und Rettungswegen weisen neben dem Notauftaster, der ein Entriegeln der Tür im Notfall erlaubt, auch einen Schlüsselschalter auf, mit dem beispielsweise die Tür außerhalb eines Notfalls geöffnet oder der Verriegelungsmechanismus der Tür für eine bestimmte Zeit außer Kraft gesetzt werden kann. Der Tastschalter und der Schlüsselschalter sind in der Regel übereinander oder nebeneinander angeordnet. Folglich deckt die Türzentrale eine relativ große Fläche ab. Nachteilig bei den Schlüsselschaltern ist die verhältnismäßig umständliche Bedienung, da eine den Schlüsselschalter bedienende Person den Schlüssel aus einer Tasche herausziehen muss, ihn in den Schlüsselschalter einstecken muss, den Schlüsselschalter durch Drehen des Schlüssels betätigen muss, den Schlüssel wieder aus dem Schlüsselschalter herausziehen und schließlich den Schlüssel wieder wegstecken muss.

In der DE 102 34 301 B3 wird eine Sicherungs- und Überwachungsvorrichtung für Türen, Fenster oder dergleichen beschrieben, bei der zusätzliche Funktionen integriert werden können, und die für unterschiedliche Einbausituationen verwendet werden kann. Diese Vorrichtung schlägt jedoch keine einfacher zu bedienende Alternative zum Schlüsselschalter vor.

Der Erfindung liegt die Aufgabe zugrunde, eine gattungsgemäße Türzentrale dahingehend zu verbessern, dass die bisher mit dem Schlüsselschalter zu bedienenden Funktionen einfacher zu bedienen sind.

Die Aufgabe wird durch die Merkmale des Anspruchs 1 gelöst.

Die Unteransprüche bilden vorteilhafte Ausgestaltungsmöglichkeiten der Erfindung.

Die erfindungsgemäße Türzentrale weist eine Leseeinheit auf. Somit ersetzt die Leseeinheit zukünftig den Schlüsselschalter, wodurch die Funktionen, die bisher mit Hilfe des Schlüsselschalters ausgeführt wurden, jetzt beispielsweise mittels eines Transponders, der mit der Leseeinheit zusammenwirkt, ausführbar sind. Durch den Transponder, den die berechtigte Person bei sich trägt, kann sie die jeweiligen Funktionen an der Türzentrale ausführen. Der Transponder wirkt berührungslos mittels elektromagnetischer Wellen mit der Leseeinheit zusammen und ist geeignet Daten zur Leseeinheit zu übertragen. So können beispielsweise bestimmte Personen, welche die Tür betreten dürfen, anhand bestimmter Daten identifiziert werden. Die verhältnismäßig umständliche Bedienung des Schlüsselschalters entfällt somit.

Es ist möglich, dass unterschiedliche Personen durch den Transponder unterschiedliche Rechte eingeräumt bekommen. Solche Rechte können beispielsweise sein, dass man außerhalb des Notfalls die Tür öffnen kann oder einen Verriegelungsmechanismus der Tür für eine bestimmte Dauer außer Kraft setzen kann oder eine Freischaltung quittieren kann. Natürlich ist es auch möglich, dass eine Person über alle Rechte verfügen kann.

Um die Fläche, welche die Türzentrale abdeckt, möglichst gering zu halten, kann die Leseeinheit in einem Betätigungselement zur Betätigung eines Notauftasters integriert sein.

Die Leseeinheit lässt sich aufgrund seiner verhältnismäßig geringen Einbauabmessungen jedoch auch an vielen anderen Stellen platzsparend anordnen. So kann er beispielsweise in einer Steuerungseinheit zur Türsteuerung vorgesehen werden.

Da die Leseeinheit und der dazugehörige Transponder auf der Basis von elektromagnetischen Wellen arbeiten, kann der Transponder beispielsweise auch von der Hosentasche der berechtigten Person aus wirken, so dass der Bedienungskomfort bei dieser Ausführungsvariante äußerst hoch ist. Sollte der Transponder verloren gehen, so genügt es, dem Transponder lediglich die Zutrittsberechtigung zu entziehen, so dass eine andere Person, die den verloren gegangenen Transponder findet und nicht zutrittsberechtigt ist, keinen Missbrauch ausüben kann.

Die Leseeinheit kann auch mit biometrischen Daten arbeiten. So ist es beispielsweise denkbar, dass die Leseeinheit ausgebildet ist, dass diese Fingerabdrücke und Gesichter erfasst, die zutrittsberechtigten Personen zuordenbar sind. Somit ist ein Passieren der Tür ohne jeden Zusatzaufwand möglich.

Ferner kann die Leseeinheit ein Kartenlesegerät sein. Die zutrittsberechtigte Person muss dann lediglich eine sie identifizierende Karte in das Kartenlesegerät schieben, um beispielsweise die Tür passieren zu können.

Der Notauftaster weist einen Tastschalter auf, der entweder ein einen langen Schalthub aufweisender Langhubtastschalter oder ein einen kurzen Schalthub aufweisender Kurzhubtastschalter sein kann. Der Langhubtastschalter kann insbesondere die Energie fester Schläge, wie sie im Notfall häufig vorkommen, gut aufnehmen. Der Kurzhubtastschalter weist eine geringere Dicke auf als der Langhubtastschalter und benötigt folglich einen geringeren Einbauraum. Die damit verbundene Platzersparnis ermöglicht es beim Kurzhubtastschalter elektronische Bauteile aufnehmen zu können. Für die Realisierung des Kurzhubtastschalters eignet sich ein Mikroschalter besonders gut.

Um beim Kurzhubtastschalter im Notfall die Alarmstellung zuverlässig beibehalten zu können, kann der Kurzhubtastschalter in einer Alarmstellung verrastet werden. Nach dem der Notfall vorüber ist, kann die Alarmstellung durch eine Rückstelltaste zum Entrasten des Kurzhubtastschalters verlassen werden. Beim Langhubtastschalter, der im Notfall ebenfalls verrastbar ist, kann die Alarmstellung durch eine Zieh- oder Drehbewegungen am Langhubtastschalter verlassen werden.

Auf dem Betätigungselement, mit dem der Kurzhubtastschalter betätigt werden kann, kann eine Folie angebracht sein. Durch die Folie weist der Kurzhubtastschalter an seiner Bedienseite nur eine sehr geringe Dicke auf.

Wenn auf der Folie oberhalb des Betätigungselements eine farbige Fläche vorgesehen ist, die vorzugsweise rot ist, kann das Betätigungselement im Notfall sofort erkannt werden.

Um ein unbeabsichtigtes Betätigen des Notauftasters zu verhindern, kann optional eine transparente Abdeckung vorgesehen sein. Die Abdeckung kann aus einem Rahmen und einer in diesem verschiebbar angeordneten Abdeckscheibe bestehen. Die Abdeckscheibe kann in Richtung auf die Folie des Betätigungselements gewölbt sein oder Fortsätze aufweisen, welche ein sicheres Betätigen des Betätigenselements bewirken.

Die Türzentrale kann mindestens eine Anzeigeeinheit zur Anzeige des Status, in dem sich die Tür momentan befindet, aufweisen. Somit erkennt man beispielsweise, ob die Tür verschlossen oder nicht verschlossen ist.

Zur gut erkennbaren Darstellung kann die mindestens eine Anzeigeeinheit mindestens ein Leuchtmittel, das eine Leuchtdiode sein kann, aufweisen.

Damit das Betätigungselement auch bei schlechten Beleuchtungsverhältnissen im Notfall sofort erkannt werden kann, kann es von der seiner Bedienseite gegenüberliegenden Seite beleuchtbar sein und/oder können entlang seines Umfangs Leuchtmittel angeordnet sein.

Auf einer Schaltungsplatine können Klemmen, Relais und dergleichen für eine Leitungsüberwachung untergebracht sein, so dass der Tastschalter auch bei einer Störung oder Unterbrechung der Leitung seine Funktion zuverlässig erfüllen kann.

Zweckmäßigerweise kann eine Steuerungseinheit zur Steuerung des Türschlosses hinter dem Tastschalter angeordnet sein und die Türzentrale zum Einbau in eine Unterputzdose vorgesehen sein. Die Steuerungseinheit kann alternativ auch extern in einer Steuerungszentrale oder in einer weiteren Unterputzdose untergebracht sein.

Ferner betrifft die Erfindung eine Tür, die erfindungsgemäß mit einer Türzentrale nach einem der Ansprüche 1 bis 17 ausgerüstet ist.

Im Nachfolgenden werden Ausführungsbeispiele in der Zeichnung anhand der Figuren näher erläutert.

### Dabei zeigen:

- **Fig. 1**: eine Draufsicht auf eine erste Ausführungsform einer Türzentrale;
- **Fig. 2**: eine Draufsicht auf eine zweite Ausführungsform der Türzentrale.

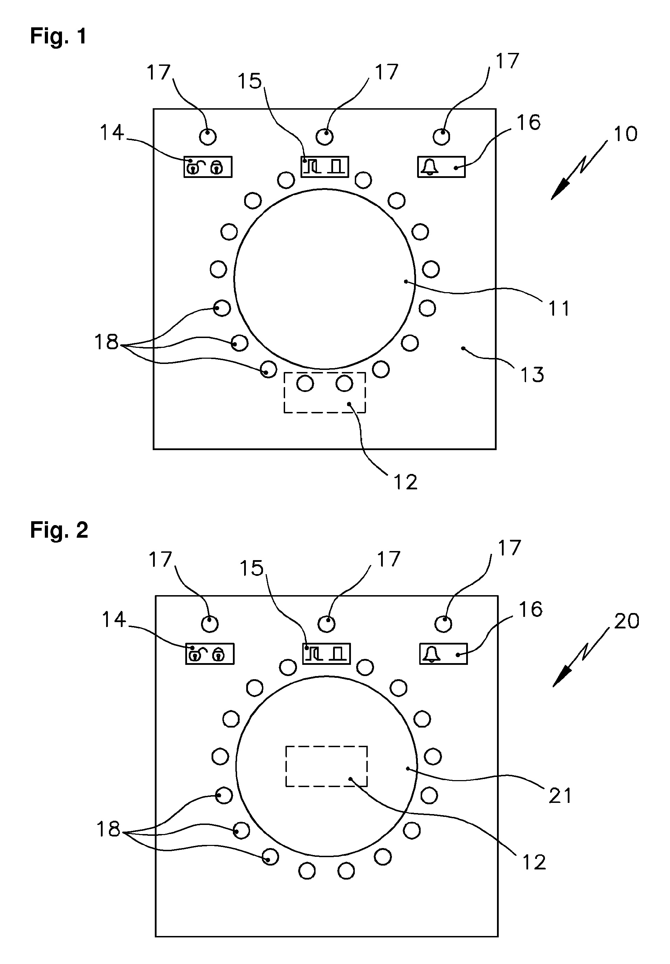

Fig. 1 zeigt eine Türzentrale 10 mit einem Notauftaster, welcher ein Betätigungselement 11 zur Betätigung eines hier nicht näher dargestellten Tastschalters aufweist, und eine Leseeinheit 12, die mit einem hier nicht gezeigten Transponder zusammenwirkt. Das Betätigungselement 11 kann von einer Person im Notfall bedient werden, um eine hier nicht näher dargestellte Tür zu öffnen.

Die Leseeinheit 12, die hinter einer Abdeckung 13 von außen nicht sichtbar verborgen ist, ermöglicht es außerhalb des Notfalls die Tür zu öffnen oder einen Verriegelungsmechanismus der Tür für eine bestimmte Dauer außer Kraft zu setzen. Zusätzlich kann die Leseeinheit 12 zur Quittierung einer Freischaltung, mit der eine Stromversorgung zur elektrischen Verriegelung der Tür unterbrochen werden kann, dienen.

Die Leseeinheit 12 ist im dargestellten Ausführungsbeispiel in einer hier nicht näher dargestellten Steuerungseinheit zur Türsteuerung untergebracht.

Fig. 2 zeigt eine Türzentrale 20, bei welcher die Leseeinheit 12 ebenfalls von außen nicht sichtbar in einem Betätigungselement 21 integriert ist.

Die Türzentralen 10 und 20 sind mit Anzeigeeinheiten 14, 15 und 16 zur Anzeige des Status, in dem sich die Tür momentan befindet, ausgestattet. Mittels der Anzeigeeinheit 14 erkennt eine Person sofort, ob die Tür verriegelt ist oder nicht. Die Anzeigeeinheit 15 zeigt an, ob die Tür geöffnet ist oder geschlossen ist. Die Anzeigeeinheit 16 kennzeichnet einen Alarmzustand. Die Anzeigeeinheiten 14, 15 und 16 sind besonders dann sinnvoll, wenn sich die Türzentralen 10 und 20 nicht in unmittelbarer Nähe zur Tür befinden. Die Anzeigeeinheiten 14, 15 und 16 können Leuchtmitteln 17, die Leuchtdioden sein können, aufweisen.

Entlang des Umfangs der Betätigungselemente 11 und 21 sind Leuchtmittel 18 angebracht, durch welche die Betätigungselemente 11 und 21 auch bei schlechten Beleuchtungsverhältnissen erkennbar gemacht werden. Die Leuchtmittel 18 können ebenfalls vorzugsweise Leuchtdioden sein.

Vorteilhaft ist mit der erfindungsgemäße Türzentrale 10, 20 eine Anordnung der Anzeigeeinheiten 14, 15, 16, des Notauftasters mit Betätigungselement 11, 21, der Leseeinheit 12 sowie der Steuerung in einer einzigen Einheit möglich, die auch zum Einbau in eine Unterputzdose geeignet sein kann.

### Liste der Referenzzeichen

- 10: Türzentrale
- 11: Betätigungselement
- 12: Leseeinheit
- 13: Abdeckung
- 14: Anzeigeeinheit
- 15: Anzeigeeinheit
- 16: Anzeigeeinheit
- 17: Leuchtmittel
- 18: Leuchtmittel

- 20: Türzentrale
- 21: Betätigungselement

## Patentansprüche

1. Türzentrale (10, 20) zur Steuerung eines elektrischen Türschlosses einer Tür, insbesondere zur Entriegelung des Türschlosses im Notfall, mit einem Tastschalter,
**dadurch gekennzeichnet,**
**dass** sie auch eine Leseeinheit (12) aufweist.

2. Türzentrale nach Anspruch 1,
**dadurch gekennzeichnet, dass** die Leseeinheit (12) in einem Betätigungselement (11, 21) zur Betätigung des Tastschalters integriert ist.

3. Türzentrale nach Anspruch 1,
**dadurch gekennzeichnet,dass** die Leseeinheit (12) in einer Steuerungseinheit zur Türsteuerung vorgesehen ist.

4. Türzentrale nach einem der Ansprüche 1 bis 3,
**dadurch gekennzeichnet, dass** die Leseeinheit (12) mit elektromagnetischen Wellen arbeitet.

5. Türzentrale nach einem der Ansprüche 1 bis 4,
**dadurch gekennzeichnet, dass** die Leseeinheit (12) mit biometrischen Daten arbeitet.

6. Türzentrale nach einem der Ansprüche 1 bis 5,
**dadurch gekennzeichnet, dass** die Leseeinheit (12) ein Kartenlesegerät ist.

7. Türzentrale nach einem der Ansprüche 1 bis 6,
**dadurch gekennzeichnet, dass** der Tastschalter ein einen langen Schalthub aufweisender Langhubtastschalter oder ein einen kurzen Schalthub aufweisender Kurzhubtastschalter sein kann.

8. Türzentrale nach Anspruch 7,
**dadurch gekennzeichnet, dass** der Kurzhubtastschalter in einer Alarmstellung verrastbar ist und eine Rückstelltaste zum Entrasten aufweist.

9. Türzentrale nach Anspruch 7 oder 8,
**dadurch gekennzeichnet, dass** auf dem Betätigungselement (11, 21), mit dem der Kurzhubtastschalter betätigbar ist, eine Folie angebracht ist.

10. Türzentrale nach Anspruch 9,
**dadurch gekennzeichnet, dass** auf der Folie oberhalb des Betätigungselements (11, 21) eine farbige Fläche vorgesehen ist.

11. Türzentrale nach einem der Ansprüche 7 bis 10,
**dadurch gekennzeichnet, dass** auf dem Kurzhubtastschalter eine transparente Abdeckplatte angebracht ist.

12. Türzentrale nach einem der Ansprüche 1 bis 11,
**dadurch gekennzeichnet, dass** sie mindestens eine Anzeigeeinheit (14, 15, 16) zur Anzeige des Status, in dem sich die Tür momentan befindet, aufweist.

13. Türzentrale nach Anspruch 12,
**dadurch gekennzeichnet, dass** die mindestens eine Anzeigeeinheit (14, 15, 16) mindestens ein Leuchtmittel (17) aufweist.

14. Türzentrale nach einem der Ansprüche 1 bis 13,
**dadurch gekennzeichnet, dass** das Betätigungselement (11, 21) von der seiner Bedienseite gegenüberliegenden Seite von innen her beleuchtbar ist und/oder entlang seines Umfangs Leuchtmittel (18) angeordnet sind.

15. Türzentrale nach einem der Ansprüche 1 bis 14,
**dadurch gekennzeichnet, dass** auf einer Schaltungsplatine Klemmen, Relais und dergleichen für eine Leitungsüberwachung untergebracht sind.

16. Türzentrale nach einem der Ansprüche 1 bis 15,
**dadurch gekennzeichnet, dass** die Steuerungseinheit zur Steuerung des Türschlosses hinter dem Tastschalter oder in einer externen Steuerungszentrale untergebracht ist.

17. Tür,
**dadurch gekennzeichnet, dass** sie mit einer Türzentrale (10, 20) nach einem der Ansprüche 1 bis 16 ausgerüstet ist.
